# FASCICULE DE BREVET EUROPEEN

(11) **EP 0 362 099 B1**
(45) Date de publication et mention de la délivrance du brevet: **19.05.1993**
(21) Numéro de dépôt: 89460025.3
(22) Date de dépôt: 13.09.1989
(51) Int. Cl.: A22C 7/00

(54) **Dispositif pour produire en continu des morceaux de viande sensiblement parallèlépipèdiques**
Vorrichtung zum kontinuierlichen Herstellen von im wesentlichen würfelförmigen Fleischstücken
Device for continuously producing virtually parallelepiped pieces of meat

(30) Priorité: 13.09.1988 FR 8812070
(43) Date de publication de la demande: 04.04.1990
(73) Titulaire: KAUFLER SA, F-22604 Loudeac (FR)
(72) Inventeur: Champalaune, Jean-Claude, F-22230 Merdrignac (FR); Corveler, Yvon, F-56300 Pontivy (FR); Coutard, André, F-14310 Villers Bocage (FR)
(74) Mandataire: Le Faou, Daniel

(56) Documents cités:
- DE-A- 3 202 748
- DE-C- 639 210
- FR-A- 323 033
- FR-A- 2 238 437
- US-A- 2 085 108
- US-A- 2 539 232
- US-A- 3 502 127
- US-A- 3 934 050
- US-A- 3 991 440
- US-A- 4 060 998

## Description

La présente invention concerne un dispositif pour produire en continu des morceaux de viande sensiblement parallèlépipédiques à partir de blocs de viande de plus grandes dimensions.

Ce dispositif trouve particulièrement son application pour la production de morceaux de viande de bovins ou de porcs.

Le marché des produits carnés a vu ces dernières années une augmentation sensible de la consommation de produits transformés en portions individuelles tels que les viandes hachées, panées... Parallèlement, la consommation des viandes traditionnelles (bifteck, poulet entier, ...) a régressé. Le consommateur recherche en fait des aliments présentant des qualités constantes.

L'évolution de la filière de la viande montre également que des produits intermédiaires sont de plus en plus souvent livrés à l'industriel qui élabore le produit final destiné à la vente. Ces produits intermédiaires - ou "minerai" - sont en fait des morceaux de viande de petites dimensions. L'industriel peut alors doser au mieux les différents constituants de sa préparation (gras, maigre, etc.) afin d'obtenir un produit final de qualité constante. Cette évolution trouve tout particulièrement son application dans le secteur des viandes panées ou hachées ainsi que dans celui de la charcuterie cuite ou sèche.

Bien entendu, ce minerai doit présenter des caractéristiques précises :
- la nature de la viande doit être facilement identifiable ;
- la structure des fibres musculaires doit avoir été respectée ;
- la viande doit avoir subi peu de pressions susceptibles d'extruder hors de la masse musculaire les corps gras et l'eau, favorisant ainsi la formation d'émulsions ; il est important d'éviter ces émulsions car, d'une part elles sont indésirables pour la fabrication ultérieure de certains produits finaux, d'autre part elles sont responsables d'un phénomène d'enrobage des maigres nuisible à l'analyse par voie optique de la composition du minerai (détermination du rapport gras/maigre) ;
- les morceaux doivent présenter une forme régulière ;
- la viande doit présenter le minimum de morceaux de petite taille (fines) qui favorisent l'émulsion.

Des dispositifs permettant d'obtenir ce minerai et, par conséquent, susceptibles d'effectuer une coupe tridimensionnelle de la viande, ont déjà été proposés.

Ainsi, on connait un dispositif dans lequel la viande est extrudée en lanières au travers d'une grille, un couteau tournant transversal étant situé derrière cette grille. Des dispositifs de ce type, couramment désignés sous les noms de "cubeuse" ou de "lardonneuse" sont actuellement commercialisés, notamment sous les dénominations commerciales TREIF, HOLAC, RUHLE et qui divulguent le préambule de la revendication 1.. Malheureusement, ce type de dispositif ne convient pas pour l'obtention d'un minerai possédant les caractéristiques précédemment décrites. En effet la viande subit de très fortes pressions lors du passage au travers de la grille. Par conséquent, la viande est dénaturée et le taux d'émulsion est très élevé.

Par ailleurs, les machines connues ne permettent pas une alimentation en continu du dispositif de découpage des viandes.

La présente invention a pour but de fournir un dispositif qui permet de produire, de façon continue, des morceaux de viande sensiblement parallèlépipédiques à partir de blocs de viande de plus grandes dimensions, ces morceaux présentant une structure de fibre conservée et ayant subi peu de contraintes de pression. Les morceaux obtenus seront de taille régulière et comporteront peu de fines (morceaux de petite taille). L'invention a également pour but de fournir un dispositif permettant de traiter rapidement en continu, une masse importante de blocs de viande. Elle a également pour but de pouvoir traiter de la viande congelée ou de la chair fraîche.

Ces buts sont atteints par le fait que le dispositif de l'invention comporte une unité d'alimentation en blocs de viande à vis d'Archimède, un conformateur disposé à la sortie de ladite unité d'alimentation, des moyens de coupe transversale et des moyens de coupe longitudinale et que ledit conformateur est constitué de deux parties, à savoir, une première partie en forme d'entonnoir ayant une entrée de section sensiblement circulaire et une sortie de section rectangulaire allongée et une seconde partie constituant en une filière de forme parallèlépipèdique, dont la section est sensiblement identique à celle de la sortie de la première partie et dont les grandes faces présentent des fentes longitudinales disposées en regard deux à deux, destinées à recevoir les organes de coupe des moyens de coupe longitudinale.

Selon d'autres caractéristiques particulièrement avantageuses mais non limitatives :
- lesdits moyens de coupe longitudinale consistent en des disques rotatifs qui coopèrent avec un rouleau de contre-lames mobiles ;
- les moyens de coupe transversale sont disposés à la sortie du conformateur ;
- les moyens de coupe transversale consistent en une lame à guillotine ;
- la partie en forme d'entonnoir est montée basculante, et il est prévu un vérin à double effet apte à faire pivoter celle-ci vers le haut, d'un angle voisin de 90°, ce qui permet d'évacuer de celle-ci les blocs de viande non découpés (reliquat de l'opération).

D'autres caractéristiques et avantages de la présente invention apparaîtront à la lecture de la description détaillée d'un mode de réalisation du dispositif.

Cette description sera faite en référence aux dessins annexés dans lesquels :
- la figure 1 représente, de côté, une vue schématique du dispositif ;
- la figure 2 est une vue simplifiée, en perspective, du conformateur ;
- la figure 3 représente, vue de côté, le conformateur de la figure-précédente, la pièce en forme d'entonnoir ayant subi un pivotement de 90° ;
- les figures 4A et 4B représentent les moyens de coupe longitudinale, respectivement en vue de dessus et vue de face ;
- les figures 5A et 5B représentent les moyens de coupe transversale, respectivement en vue de face et vue de côté ;

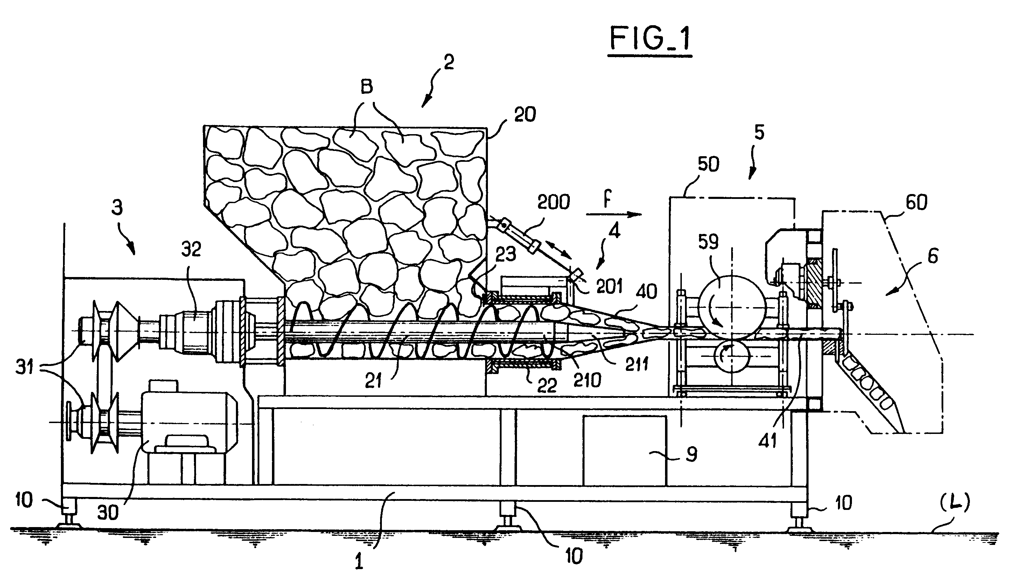

Le dispositif représenté à la figure 1 comporte un châssis 1 dont les pieds 10 reposent sur le sol (L). Sur ce châssis est montée une unité 2 d'alimentation en blocs de viande. Cette unité 2 comprend une vis d'Archimède qui est entraînée en rotation grâce à un groupe moteur 3. Sur le châssis sont montés également un conformateur 4, des moyens de coupe longitudinale 5 et des moyens de coupe transversale 6. Ces différents éléments seront décrits en détail plus loin. Le sens de déplacement général de la viande dans le dispositif est figuré par la flèche (f).

L'unité d'alimentation en blocs de viande comporte une trémie de stockage 20. Par l'expression "blocs de viande", on entend des masses musculaires de taille et de masse relativement importantes préalablement débitées ou non. Il s'agit de pièces anatomiques complètes, par exemple des colliers de boeuf, dont la masse moyenne est de l'ordre de 25 kg. Cette trémie présente une taille suffisamment grande pour recevoir un nombre élevé de blocs de viande (B). Au fond de la trémie est disposée une vis d'Archimède 21, d'axe sensiblement horizontal, dont la fonction est d'amener progressivement les blocs vers le conformateur 4. La partie aval 210 de celle-ci est guidée en rotation dans une virole 22 de manière à ne gêner, en aucun cas, l'acheminement des blocs de viande. Si la vis était guidée, de manière courante, dans un palier, cela provoquerait en effet un obstacle contrariant cet acheminement et provoquant sur les blocs des contraintes de pression indésirables. La surface intérieure de la virole 22 est de préférence cannelée afin d'empêcher les blocs entraînés par la vis d'effectuer un mouvement rotatif sans déplacement longitudinal. La vis est entraînée en rotation par un moteur 30, via un variateur 31 et un réducteur 32. Le moteur est, par exemple, de type électrique. L'extrémité aval 211 de la vis est tronconique et présente un angle de conicité relativement faible. Il est à remarquer que cette extrémité se situe en dehors de la virole 22, à l'intérieur du conformateur 4. La forme tronconique de l'extrémité aval 211 de la vis a pour fonction de maintenir sensiblement constante la section de passage des viandes ou, en d'autres termes, d'éviter au maximum des brusques changements de section (comme se serait le cas à l'intérieur du conformateur avec une vis de type courant présentant une extrémité cylindrique) qui provoqueraient une expansion rapide des blocs de viande.

A l'entrée de la virole 22, à la partie supérieure de celle-ci, est disposée une lame 23 à arête tranchante dont la fonction est de coopérer avec le filet de la vis d'Archimède 21 pour effectuer un prédécoupage partiel des blocs ; il s'agit d'une séparation grossière préalable qui favorise l'acheminement des viandes par la vis vers le conformateur, certains blocs volumineux se trouvant sectionnés en deux morceaux (ou plus).

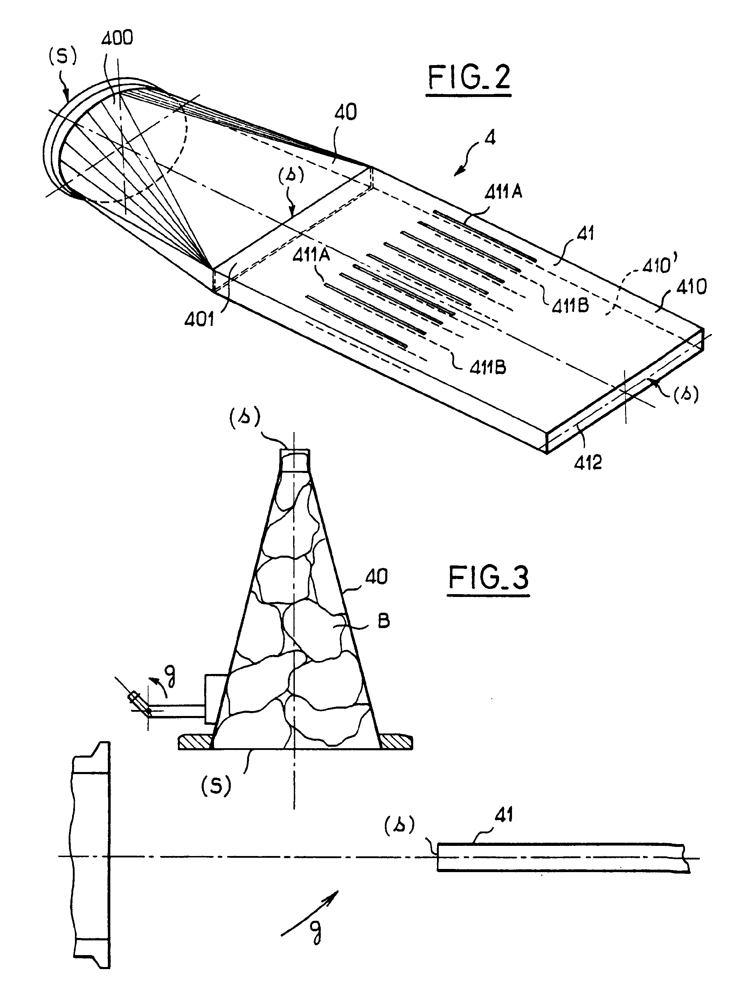

Le conformateur 4 est constitué de deux pièces interchangeables 40 et 41 (figure 2). La pièce 40 qui présente une forme générale d'entonnoir comporte une entrée 400 de section sensiblement circulaire qui s'adapte sur la virole 22 précédemment décrite. La sortie 401 de cette pièce a une section (s) de forme rectangulaire allongée. Selon un mode particulier de réalisation de l'invention, la section (S) de l'entrée 400 est trois fois plus grande que la section (s).

La pièce 41, ou filière, a, quant à elle, une forme parallèlépipédique et présente une section transversale sensiblement identique à la section (s) de la sortie 401 de la pièce 40. Des moyens appropriés (non représentés) sur la figure 2 permettent d'assurer une liaison étanche entre les pièces 40 et 41. Les grandes faces 410 et 410' de la filière 41 présentent chacune une série de rainures longitudinales 411A, 411B. Les rainures 411A et 411B sont disposées en regard deux à deux. La fonction de ces rainures sera expliquée plus loin . On comprend aisément, à la lecture de la figure 2 que les blocs de viande (B) acheminés par la vis d'Archimède 21 à l'entrée 400 du conformateur sont progressivement poussés à l'intérieur de celui-ci et conformés (par aplatissement) pour prendre finalement la section (s).

Selon une caractéristique essentielle de l'invention le dispositif comporte des moyens de coupe longitudinale 5 qui sont disposés au niveau du conformateur, et plus précisément de la filière. Ces moyens sont contenus dans un boîtier 50 porté par le châssis 1. La filière 41 traverse ce boîtier de part en part de façon que les rainures 411A, 411B se situent à l'intérieur de celui-ci.

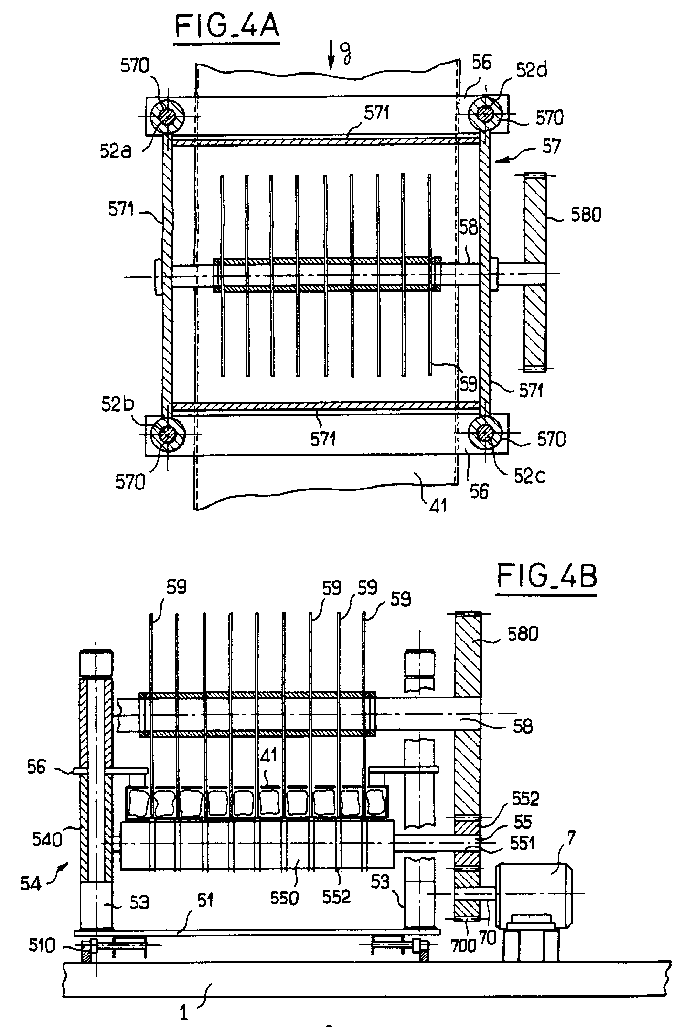

Les moyens de coupe longitudinale sont plus particulièrement illustrés sur les figures 4A et 4B. Le sens d'acheminement de la viande a été représenté par la flèche (g). Une plaque de support 51 est montée sur des galets, ou roulettes 510 guidées sur des rails longitudinaux. Cette plaque supporte, à chacun de ses angles des colonnes verticales 52a, 52b, 52c, 52d. Sur chacune de ces colonnes sont emmanchées des entretoises cylindriques 53. Sur celles-ci est placé un cadre 54 qui comprend à ses angles des tubes 540 reliés deux à deux par des plaques non visibles. Deux de ces plaques, parallèles entre elles, présentent chacune une lumière traversée par un arbre 55. Sur cet arbre est monté un rouleau 550 de contre lames. L'extrémité libre 551 de l'arbre 55 est équipé d'un pignon (roue dentée) 552. Sur les colonnes 52a à 52d sont également emmanchés des organes de support 56 de la filière 41. Enfin, un cadre 57 qui présente une forme similaire au cadre 54 complète l'empilage sur les colonnes. Les tubes 570 et plaques 571 de ce cadre sont visibles sur la figure 4A. Ce cadre 57 supporte un arbre 58 équipé de disques de coupes 59. Le nombre des disques et leur espacement est tel que chacun de ceux-ci coïncide avec une paire de rainures 411A, 411B de la filière et avec une des gorges 55 du rouleau de contre-lames 550. L'arbre 58 est également équipé à l'une de ses extrémités d'un pignon 580. On remarque sur la figure 4B que les pignons 552 et 580 sont en prise l'un sur l'autre, formant un engrenage. Le pignon 552 est entraîné par un pignon 700 solidaire de l'arbre de sortie 70 d'un moteur électrique 7. La mise en route du moteur provoque donc la rotation conjointe des disques de coupe 59 et du rouleau de contre-lames 550. Il est à noter que cet agencement d'éléments emboîtables les uns sur les autres est particulièrement pratique dans la mesure où il permet de nettoyer ou changer l'un ou l'autre des éléments, sans manipulation et désaccouplement complexes, par simple désempilage. Il est avantageux de prévoir plusieurs jeux d'outils de coupe longitudinale, interchangeables (bloc de disques/rouleau de contre-lames) possèdant des largeurs de coupe différentes, associés chacun à une filière ayant des fentes correspondantes, de manière à pouvoir modifier la largeur des lanières obtenues ; c'est pourquoi la facilité de démontage de ces outils est une caractéristique intéressante du dispositif.

Les blocs de viande qui sont acheminés progressivement à l'intérieur du conformateur et mis en forme par celui-ci, arrivent au niveau des moyens de coupe longitudinale où ils subissent une coupe longitudinale qui les débite en lanières. Cette coupe s'effectue de façon tout à fait uniforme puisque les blocs de chair sont confinés les uns contre les autres dans le conformateur. Ainsi, il ne s'opère aucune fausse coupe.

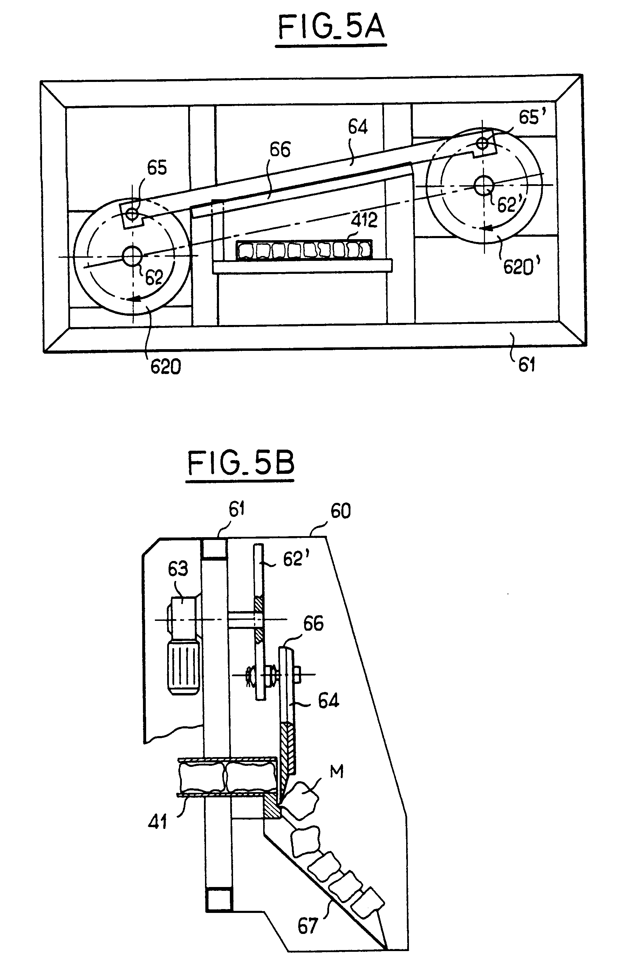

Le dispositif de l'invention comprend également des moyens de coupe transversale 6 protégés par un capot 60. Ces moyens sont disposés juste à la sortie 412 de la filière 41 et perpendiculairement à celle-ci. Ils comprennent un châssis 61 qui supporte deux axes longitudinaux 62, 62' portant des disques rotatifs identiques 620, 620'. L'un des axes 62 est entraîné en rotation par un moteur 63 solidaire du châssis 61. Une transmission par chaîne (non représentée) entre les axes 62, 62' assure la synchronisation des deux disques 620, 620' qui doivent tourner à la même vitesse. Dans une variante il pourrait être prévu deux moteurs synchronisés assurant chacun l'entraînement positif de ces disques. Une biellette 64 est articulée à ses extrémités à chacun des disques 620, 620' au moyen d'un axe 65, 65'. Le bord inférieur de la biellette 64 est équipé d'une lame à guillotine 66 qui présente une arête tranchante. On comprend aisément, à l'observation des figures 5A et 5B que la mise en route du moteur 63 provoque un mouvement oscillant, de bas en haut, avec une composante oblique, de la lame 66. De cette façon, au fur et à mesure que les lanières de viande précédemment découpées par les moyens de coupe longitudinale arrivent à la sortie de la filière, celles-ci subissent une coupe transversale qui les transforme en morceaux sensiblement parallèlépipédiques (M), voire en lamelles de faible épaisseur (quelques millimètres, par exemple). Il s'agit d'une coupe franche et régulière rendue possible par le fait que les lanières de chair sont à la sortie de la filière encore conformées et jointives. La coupe en "oblique" évite les chocs, la lame rencontrant progressivement les différentes lanières. Après la coupe, les morceaux de viande tombent par gravité le long d'une goulotte 67 dans un réceptacle approprié (non représenté).

Il va de soi que la lame de coupe transversale 66 doit être actionnée à une vitesse relativement élevée pour ne pas contrarier l'avance de la matière dans le dispositif, avance qui se fait de manière continue dans la filière.

Lorsque l'on arrête la machine, il est souhaitable d'enlever du dispositif, essentiellement en vue du nettoyage de celui-ci, les blocs de viande qui se trouvent encore au voisinage de la vis d'Archimède et dans le conformateur.

Afin de pouvoir avoir accès au conformateur et à la vis, toujours pour raison de nettoyage, les moyens de coupe longitudinale et transversale peuvent être déplacés par rapport au châssis. A cet effet, les moyens de coupe transversale (6) sont articulés sur le châssis autour d'un axe vertical, sur un côté (à la manière d'une porte). En les faisant pivoter vers l'extérieur, on libère un espace suffisant pour autoriser le déplacement des moyens de coupe longitudinale (5), au moyen des roulettes 510 (le long des rails de guidage) après que les deux éléments 40 et 41 du conformateur aient été désolidarisés. La pièce 40 du conformateur est montée basculante autour d'un axe horizontal transversal 201. Le basculement de cette pièce est commandé par un vérin à double effet 200. Le déplacement positif de la tige de ce vérin (rétractation dans le corps du vérin) provoque le pivotement de la pièce 40 dans un mouvement circulaire vers le haut (flèches g, figure 3). Ce mouvement est d'environ 90° par rapport à la position occupée par la pièce 40 en cours d'utilisation. Dans cette position (voir en particulier la figure 3), on a accès très facilement aux blocs de chair qui se trouvent dans le conformateur. Un bac 9 déposé à la partie inférieure du châssis 1 permet de récupérer ces blocs en vue de leur réutilisation.

Il est également prévu des moyens pour libérer l'espace occupé en position d'utilisation par les moyens de coupe 5 et 6, par exemple par pivotement à 90°. Lorsque la pièce 40 du conformateur est en position relevée, il est alors possible de dégager du dispositif la vis d'Archimède par coulissement après en avoir désolidarisé l'arbre de son palier d'entraînement. On peut ainsi dégager manuellement les blocs de viande coincés entre les filets de la vis ainsi que ceux tombés dans le fond de la trémie, puis nettoyer l'ensemble du dispositif.

Le dispositif qui vient d'être décrit permet, de façon simple, d'obtenir un minerai qui présente toutes les qualités autorisant son utilisation pour l'élaboration de produits finis. Au cours de l'acheminement des blocs de chair dans le dispositif, ceux-ci ne subissent que de légères contraintes qui n'ont aucune influence défavorable sur la structure de la chair ou sur l'apparition de fines génératrices d'émulsion.

Le dispositif présente un grand intérêt industriellement puisqu'il permet de traiter des blocs de chair en continu. A ce titre, il peut être prévu des moyens pour alimenter automatiquement la trémie et acheminer les parallèlépipèdes de viande produits vers un local de stockage.

Les longueurs des parallèlépipèdes peuvent être adaptées à la demande en jouant sur la vitesse de rotation de la vis (variation de la vitesse de déplacement à l'intérieur du conformateur) ou sur le rythme de découpe transversale. D'autre part, comme cela a déjà été expliqué précédemment, il peut être prévu plusieurs jeux d'outils de coupe longitudinale, dont l'interchangeabilité permet de modifier la largeur de ces parallèlépipèdes.

Il est à noter que les moyens de coupe transversale qui, selon l'invention, sont avantageusement constitués par une lame à guillotine pourraient être remplacés par d'autres moyens, par exemple un dispositif mécanique comprenant un disque de coupe rotatif à mouvement planétaire, un appareil de découpe au rayon laser ou à jet d'eau sous pression.

De même, d'autres moyens de coupe longitudinale que ceux décrits pourraient naturellement être utilisés, par exemple une série de lames rectilignes à mouvement alternatif (traversant les fentes du conformateur), un appareil de découpe au laser ou à jet d'eau, etc.

A simple titre indicatif, sont donnés ci-après des ordres de grandeurs des valeurs possibles de certaines caractéristiques relatives à la structure ou aux conditions de fonctionnement du dispositif.
- Capacité de la trémie 2 : 1m³ ;
- Température d'utilisation : entre - 5°C et + 10°C ;
- Rendement : 4 tonnes de viande à l'heure ;
- Diamètre de filet de la vis d'Archimède 21 : 300 mm ;
- Vitesse de rotation de cette vis : de 3 à 22 tours/minute ;
- Vitesse d'avance des viandes dans le dispositif : de 0,7 à 4,3 mètres/minute ;
- Section d'entrée (S) du conformateur 4 : circulaire, de diamètre 300 mm ;
- Section de sortie (s) du conformateur 4 : rectangulaire allongée, de largeur 400 mm et de hauteur 50 mm ;
- Caractéristiques des lames de coupe longitudinale 59 : nombre 9, espacement mutuel : 40 mm, diamètre 320 mm, épaisseur 3 mm, vitesse maximale de rotation : 780 tours/minute ;
- Cadence de la coupe transversale : entre 4 et 210 coupes/minute ;

Ainsi les parallèlépipédiques de viande obtenus auront par exemple une section de 50 x 40 mm, et une longueur comprise entre 7 et 70 mm, cette dimension dépendant de la vitesse d'avancement des viandes et de la cadence de la coupe transversale.

## Revendications

1. Dispositif pour produire en continu des morceaux de viande (M) sensiblement parallèlépipédiques à partir de blocs de viande (B) de plus grandes dimensions, caractérisé en ce qu'il comporte une unité d'alimentation (2) en blocs de viande à vis d'Archimède, un conformateur (4) disposé à la sortie de ladite unité d'alimentation (2), des moyens (6) de coupe transversale et des moyens (5) de coupe longitudinale et que ledit conformateur (4) est constitué de deux parties, à savoir, une première partie (40) en forme d'entonnoir ayant une entrée (400) de section (S) sensiblement circulaire et une sortie (401) de section rectangulaire allongée et une seconde partie (41) constituant en une filière de forme parallèlépipèdique, dont la section (s) est sensiblement identique à celle de la sortie (401) de la première partie (40) et dont les grandes faces (410, 410') présentent des fentes longitudinales (411A, 411B) disposées en regard deux à deux, destinées à recevoir les organes de coupe des moyens (5) de coupe longitudinale.

2. Dispositif selon la revendication 1, caractérisé en ce que lesdits moyens de coupe consistent en des disques rotatifs (59) qui coopèrent avec un rouleau de contre-lames mobiles (551).

3. Dispositif selon l'une des revendications 1 et 2, caractérisé en ce que lesdits moyens (6) de coupe transversale sont disposés à la sortie (412) du conformateur (4).

4. Dispositif selon l'une des revendications 1 à 3, caractérisé en ce que lesdits moyens de coupe transversale (6) consistent en une lame à guillotine (66).

5. Dispositif selon l'une des revendications 1 à 4, caractérisé en ce que ladite partie (40) est montée basculante, un vérin (200) à double effet étant adapté pour faire pivoter celle-ci vers le haut d'un angle de 90° environ, ce qui permet d'évacuer les blocs de viande (B) non découpés.

## Patentansprüche

1. Vorrichtung zum kontinuierlichen Herstellen von im wesentlichen würfelförmigen Fleischstücken (M) aus Fleischbrocken (8) mit größeren Abmessungen,
dadurch **gekennzeichnet**,
daß sie eine Zuführeinheit (2) für Fleischbrocken mit archimedischer Schraube, eine am Ausgang der Zuführeinheit (2) angeordnete Quetscheinrichtung (4), eine Querschneideinrichtung (6) und eine Längsschneideinrichtung (5) umfaßt und daß die genannte Quetscheinrichtung (4) zwei Teile aufweist, nämlich ein erstes trichterförmiges Teil (40), mit einem Eingang (400) mit im wesentlichen kreisrundem Querschnitt (S) und einem Ausgang (401) mit gestrecktem rechtwinkligem querschnitt und ein zweites Teil (41), das eine parallelflache Preßdüse bildet, deren Querschnitt (s) im wesentlichen identisch ist mit dem des Ausgangs (401) des ersten Teils (40) und dessen Hauptseiten (410, 410') Längsschlitze (411A, 411B) aufweisen, paarweise gegenüberliegend angeordnet und dazu bestimmt, die Längsschneideinrichtung (5) aufzunehmen.

2. Vorrichtung nach Anspruch 1, dadurch gekennzeichnet, daß die genannte Schneideinrichtung aus rotierenden Scheiben (59) besteht, die mit einer rotierenden Gegenschneidenwalze (550) zusammenwirken.

3. Vorrichtung nach einem der Ansprüche 1 und 2, dadurch gekennzeichnet, daß die Querschneideinrichtung (6) am Ausgang (412) der Quetscheinrichtung (4) angeordnet ist.

4. Vorrichtung nach einem der Ansprüche 1 bis 3, dadurch gekennzeichnet, daß die genannte Querschneideinrichtung (6) aus einem Planschneidemesser (66) besteht.

5. Vorrichtung nach einem der Ansprüche 1 bis 4, dadurch gekennzeichnet, daß das genannte Teil (40) ausklappbar montiert ist, wobei ein doppeltwirkender Zylinder (200) eingesetzt wird, um dieses um einen Winkel von ungefähr 90° nach oben zu schwenken, was es möglich macht, nicht geschnittene Fleischbrocken (B) herauszunehmen.

## Claims

1. A device for continuously producing substantially parallelepipedal pieces of meat (M) from blocks of meat (B) of larger dimensions, characterized in that it comprises an Archimedes' screw-type unit (2) for supplying blocks of meat, a shaping device (4) disposed at the exit of the supplying unit (2), transverse cutting means (6) and longitudinal cutting means (5) and in that the shaping device (4) comprises two parts, namely a first part (40) in the form of a funnel having an entrance (400) of substantially circular section (S) and an exit (401) of elongated rectangular section and a second part (41) consisting of an extrusion device of parallelepipedal form, whose section (s) is substantially identical to that of the exit (401) of the first part (40) and whose large faces (410, 410') have longitudinal slots (411A, 411B) disposed opposite one another in pairs, intended to receive the cutting members of said longitudinal cutting means (5).

2. A device according to claim 1, characterized in that said cutting means consist of rotating disks (59) which interact with a cylinder of movable counter-blades (551).

3. A device according to claim 1 or 2, characterized in that said transverse cutting means (6) are disposed at the exit (412) of said shaping device (4).

4. A device according to one of claims 1 to 3, characterized in that said transverse cutting means (6) consist of a guillotine blade (66).

5. A device according to one claims 1 to 4, characterized in that said first part (40) is mounted so as to tilt, a dual-effect jack (200) being fitted in order to pivot the latter upwards through an angle of approximately 90°, which makes it possible to remove the blocks of meat (B) which have not been cut up.
